# EUROPÄISCHE PATENTANMELDUNG

(11) **EP 4 481 996 A1**
(43) Veröffentlichungstag der Anmeldung: **25.12.2024**
(21) Anmeldenummer: 23181178.7
(22) Anmeldetag: 23.06.2023
(51) Int. Cl.: H02K 3/52, H02K 7/14

(54) **KLEMMVORRICHTUNG FÜR EINEN STATOR**

(71) Anmelder: Hilti Aktiengesellschaft, 9494 Schaan (LI)
(72) Erfinder: Asmus, Torsten, 87600 Kaufbeuren (DE); Mahler, Thomas, 18299 Laage (DE); Ruff, Christian, 86391 Stadtbergen (DE); Schaefer, Thomas, 86836 Obermeitingen (DE); Hufnagel, Peter, 87666 Pforzen (DE); Herold, Stefan, 80538 München (DE)
(74) Vertreter: Hilti Aktiengesellschaft Corporate Intellectual Property

(57) **Zusammenfassung**

Klemmvorrichtung für einen Stator eines Elektromotors, insbesondere als Antrieb für eine Werkzeugmaschine. Ein Trägerelement ist mit einem Anschlusselement sowie wenigstens einem ersten und zweiten Klauenelement vorgesehen.

Stator für einen Elektromotor mit wenigstens einer Klemmvorrichtung enthaltend ein Trägerelement mit einem Anschlusselement sowie wenigstens einem ersten und zweiten Klauenelement.

Werkzeugmaschine mit einem Stator für einen Elektromotor enthaltend wenigstens eine Klemmvorrichtung mit einem Trägerelement mit einem Anschlusselement sowie wenigstens einem ersten und zweiten Klauenelement.

## Beschreibung

Die vorliegende Erfindung betrifft eine Klemmvorrichtung für einen Stator eines Elektromotors, insbesondere als Antrieb für eine Werkzeugmaschine.

Des Weiteren betrifft die vorliegende Erfindung einen Stator für einen Elektromotor mit wenigstens einer Klemmvorrichtung.

Darüber hinaus betrifft die vorliegende Erfindung eine Werkzeugmaschine mit einem Stator für einen Elektromotor.

Aus dem Stand der Technik sind Elektromotoren bekannt, die unter anderem einen Stator und einen relativ zu dem Stator drehbaren Rotor enthalten. Für die Funktionsweise des Elektromotors und insbesondere zum wahlweisen Erzeugen eines Magnetfeldes ist es notwendig, dass der Stator eine Vielzahl von Spulenwicklungen um die jeweiligen Polzähne bzw. Statorzähne aufweist. Zum Herstellen einer Spule bzw. Spulenwicklung wird ein Wickeldraht in mehreren Lagen um den Polzahn bzw. Statorzahn gewickelt. Der Polzahn bzw. Statorzahn dient dabei als Träger für die Spulenwicklung.

Für gewöhnlich werden die jeweiligen freien Enden eines Wickeldrahts an der sogenannten Verteilerleiste kontaktiert bzw. bestromt. Klemmen bzw. Klemmvorrichtungen werden dabei verwendet, um die freien Ende des Wickeldraht zu halten und mit elektrischer Energie zu versorgen.

Statoren gemäß dem Stand der Technik weisen oftmals das Problem auf, dass nur ein begrenzter Stromstärkewert (d.h. Ampere) über die Klemmen bzw. Klemmvorrichtungen auf die Drahtwicklungen übertragen werden kann. Das Erzeugen einer besonders hohen Leistung, d.h. in Form einer hohen Drehzahl bzw. eines hohen Drehmoments, durch die Elektromotoren ist damit verhindert.

Es ist damit Aufgabe der vorliegenden Erfindung das vorstehend beschriebene Problem zu lösen.

Die Aufgabe wird gelöst durch den Gegenstand des unabhängigen Patentanspruchs 1, 6 und 7. Vorteilhafte Ausführungsformen des erfindungsgemäßen Gegenstands sind in den abhängigen Patentansprüchen enthalten.

Die Aufgabe wird insbesondere gelöst durch eine Klemmvorrichtung für einen Stator eines Elektromotors, insbesondere als Antrieb für eine Werkzeugmaschine.

Erfindungsgemäß ist ein Trägerelement mit einem Anschlusselement sowie wenigstens einem ersten und zweiten Klauenelement zur jeweiligen Aufnahme eines Wickeldrahts vorgesehen ist.

Gemäß einer alternativen Ausführungsform kann es möglich sein, dass jedes Klauenelement ein elastisch verformbaren Schenkel enthält, welches in einen ersten oder zweiten Zustand einstellbar ist, wobei in dem ersten Zustand der Schenkel unverformt ist und in dem zweiten Zustand der Schenkel so verformt ist, dass wenigstens ein Wickeldraht aufgenommen und gehalten wird. Hierdurch kann auf einfache Art und Weise ein Wickeldraht mit einem Klauenelement wiederlösbar verbunden werden.

Der Zustand "unverformt" für den Schenkel kann auch als "geöffnet" verstanden werden.

Es ist dabei auch möglich, dass das Trägerelement mehr als ein Anschlusselement und/oder mehr als zwei Klauenelement zur jeweiligen Aufnahme eines Wickeldrahts aufweist.

Entsprechend einer alternativen Ausführungsform kann es möglich sein, dass der Schenkel eine Länge aufweist, dass in einem zweiten Zustand des Schenkels wenigstens ein erster und zweiter Wickeldraht mit einer Querschnittsfläche zwischen 1,5 bis 2 mm², und insbesondere 1,8 mm², aufnehmen kann. Hierdurch kann ein besonders hoher Stromstärkewert übertragen werden.

Gemäß einer alternativen Ausführungsform kann es möglich sein, dass in einem zweiten Zustand des Schenkels ein erster Abschnitt an einem ersten Ende des Schenkels im Wesentlichen parallel zu einem zweiten Abschnitt an einem zweiten Ende des Schenkels anliegt und zwischen dem ersten und zweiten Ende des Schenkels ein Aufnahmeraum für einen Wickeldraht entsteht. Hierdurch kann eine besonders sicherer Beschluss des Schenkels sowie ein relativ sicheres Halten des Wickeldrahts erreicht werden.

Entsprechend einer alternativen Ausführungsform kann es möglich sein, dass die Klemmvorrichtung wenigstens teilweise aus einer niedriglegierten Kupferlegierung mit einem relativ niedrigen Zinngehalt und einer relativ hohen elektrischen Leitfähigkeit, insbesondere aus CuSn0,15, besteht.

Des Weiteren wird die Aufgabe gelöst durch einen Stator für einen Elektromotor mit wenigstens einer Klemmvorrichtung enthaltend ein Trägerelement mit einem Anschlusselement sowie wenigstens einem ersten und zweiten Klauenelement.

Darüber hinaus wird die Aufgabe gelöst durch eine Werkzeugmaschine mit einem Stator für einen Elektromotor enthaltend wenigstens eine Klemmvorrichtung mit einem Trägerelement mit einem Anschlusselement sowie wenigstens einem ersten und zweiten Klauenelement.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine erfindungsgemäße Werkzeugmaschine gemäß einer beispielhaften Ausführungsform mit einem Elektromotor;
- Figur 2: eine perspektivische Ansicht auf den Elektromotor mit einem Stator und einen Rotor;
- Figur 3: eine perspektivische Draufsicht auf einen erfindungsgemäßen Stator gemäß einer beispielhaften Ausführungsform;
- Figur 4: eine Detailansicht auf eine erfindungsgemäße Klemmvorrichtung gemäß einer beispielhaften Ausführungsform mit Wickeldrähten an dem Stator;
- Figur 5: eine perspektivische Draufsicht auf die erfindungsgemäße Klemmvorrichtung mit einem Trägerelement mit einem Anschlusselement sowie einem ersten und zweiten Klauenelement; und
- Figur 6: eine Detailansicht auf das erste Klauenelement mit einem ersten und zweiten Wickeldraht.

### Ausführungsbeispiele:

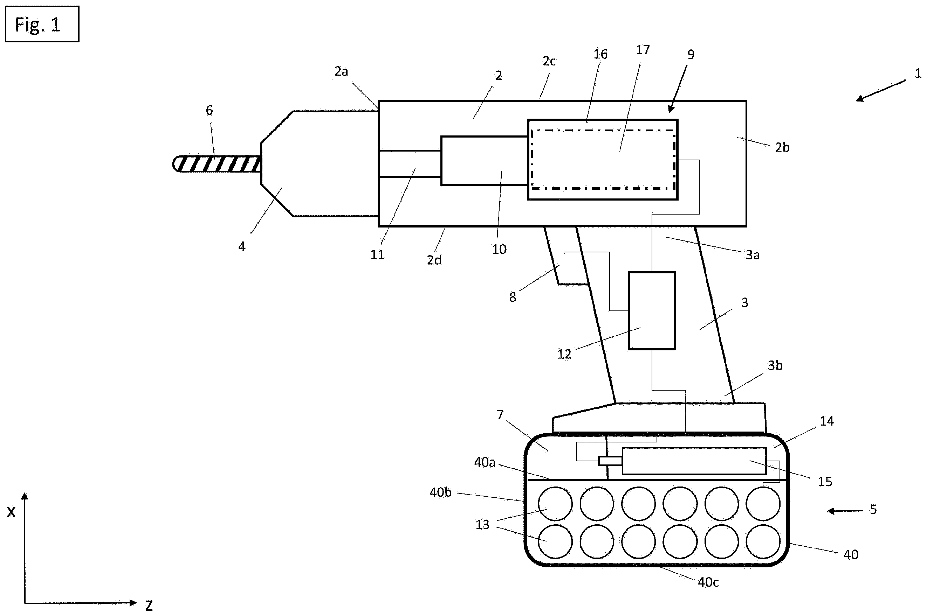

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltete sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs 6.

In dem vorliegenden Ausführungsbeispiel ist das Werkzeug 6 in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Akku-Schnittstelle 7 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Akku-Schnittstelle 7 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Antrieb 9, eine Getriebevorrichtung 10, eine Antriebswelle 11 und eine Steuerungseinrichtung 12 positioniert.

Der Antrieb 9, die Getriebevorrichtung 10, die Antriebswelle 11 und die Werkzeugaufnahme 4 so dabei so im Inneren des Gehäuses 2 zueinander angeordnet, dass ein in dem Antrieb 9 erzeugtes Drehmoment auf die Getriebevorrichtung 10, die Antriebswelle 11 und schließlich auf die Werkzeugaufnahme 4 bzw. auf das Werkzeug 6 übertragen werden kann.

Die Steuerungseinrichtung 12 ist mittels entsprechenden Leitungen 13 mit dem Aktivierungsschalter 8, der Akku-Schnittstelle 7 und dem Antrieb 9 verbunden.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 40, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 40 angeordnet.

Das Akku-Gehäuse 40 enthält dabei im Wesentlichen ein Deckelelement 40a, vier Seitenwände 40b und ein Bodenelement 40c.

Die Akku-Schnittstelle 14 ist an der Außenseite des Deckelelements 40a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie. Die Ladevorrichtung ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13. Darüber hinaus wird mit Hilfe der Steuerungseinrichtung 15 der Menge an elektrischer Energie gesteuert, die von den Energiespeicherzellen 13 aufgenommen oder abgegeben werden sollen.

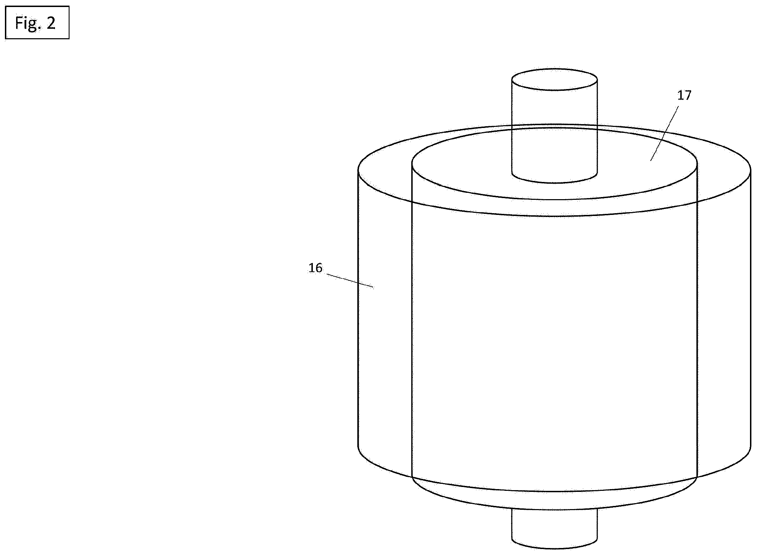

Der Antrieb 9 ist in Form eines bürstenlosen Elektromotor ausgestaltet und enthält im Wesentlichen einen Stator 16 und einen Rotor 17, vgl. Figur 2.

Der Rotor 17 ist dabei im Inneren des Stators 16 positioniert und zudem drehbar zu dem Stator 16 ausgestaltet.

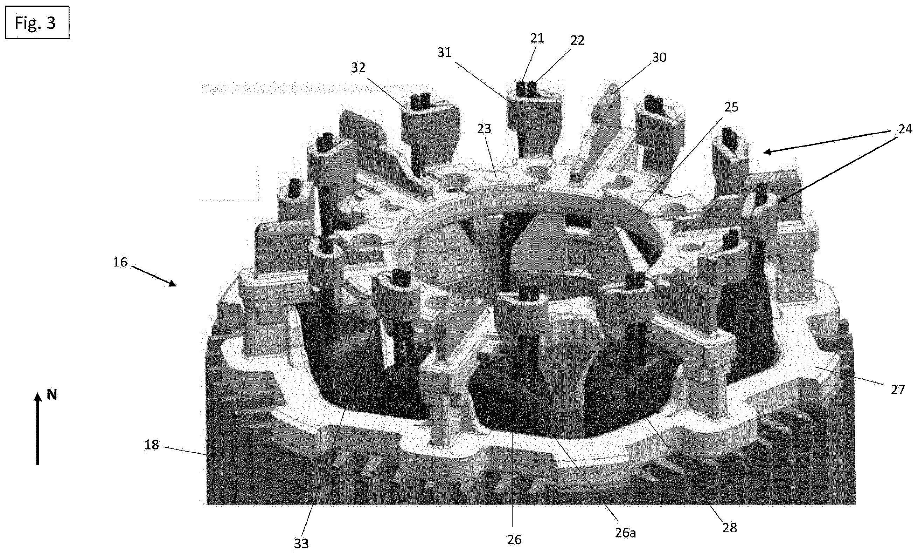

Figur 3 zeigt ein oberes Ende 16a des Stators 16 gemäß einer beispielhaften Ausführungsform. Ein unteres Ende 16b des Stators 16 ist gegenüber dem oberen Ende 16a angeordnet.

Der in den Figuren beispielhaft dargestellte Stator 16 enthält dabei ein Blechpaket 18, eine Wickelstütze 27, sechs Spulen 26 mit jeweils einem ersten und zweiten Wickeldraht 21, 22, eine Sammeleinheit 23 und sechs Klemmvorrichtungen 24. Die Spule 26 dabei auch als Wickelspule bezeichnet werden.

Der in den Figuren gezeigte Elektromotor 9 ist dabei als synchroner Dreiphasenmotor ausgestaltet, wobei die Wickeldrähte 21, 22 (auch als Leistungsdrähte bezeichnet) die U-Phase, V-Phase und W-Phase verwirklichen.

Das Blechpaket 18 besteht im Wesentlichen aus einer Anzahl an übereinander gestapelten Profilblechen. Wie in Figur 3 lediglich angedeutet erstrecken sich zu der Mitte des Blechpakets 18 sechs Polzähne 25. Um jeden einzelnen Polzahn 25 ist jeweils ein erster und zweiter Wickeldraht 21, 22 zur Bildung einer Spule 26 gewickelt. An den jeweiligen Enden 16a, 16b des Stators 16 ist jeweils eine Wickelstütze 27 angeordnet zum Stützen bzw. Halten der aus den Wickeldrähten 21, 22 gewickelte Spule 26. In Figur 3 ist das obere Ende 16a des Stators 16 gezeigt mit einer Wickelstütze 27.

Die Spulen 26 bzw. der erste und zweite Wickeldraht 21, 22 sind mit einem Kunststoff 28 überzogen, der zum Isolieren der Spule 26 dient. Aus den jeweils oberen Ende 26a einer jeden Spule 26 ragt ein freies Ende 21a, 22a des ersten und zweiten Wickeldrahts 21, 22 aus dem Isolierkunststoff 28 heraus. Die freien Enden 21a, 22a des ersten und zweiten Wickeldrahts 21, 22 erstrecken sich damit in Richtung N.

Die Sammeleinheit 23 ist in Richtung N über der Wickelstütze 27 angeordnet und dient im Wesentlichen zum Halten bzw. Positionieren der sechs Klemmvorrichtungen 24. Die Klemmvorrichtungen 24 dienen wiederum zum Aufnehmen und Halten der freien Ende 21a, 22a des ersten sowie zweiten Wickeldrahts 21, 22. Darüber hinaus dient die Klemmvorrichtungen 24 als Anschluss für die Stromversorgung bzw. die Versorgung mit elektrischer Energie der Wickeldrähte 21, 22 zum Erzeugen der U-Phase, V-Phase und W-Phase im Betrieb des als Elektromotor ausgebildete Antrieb 9.

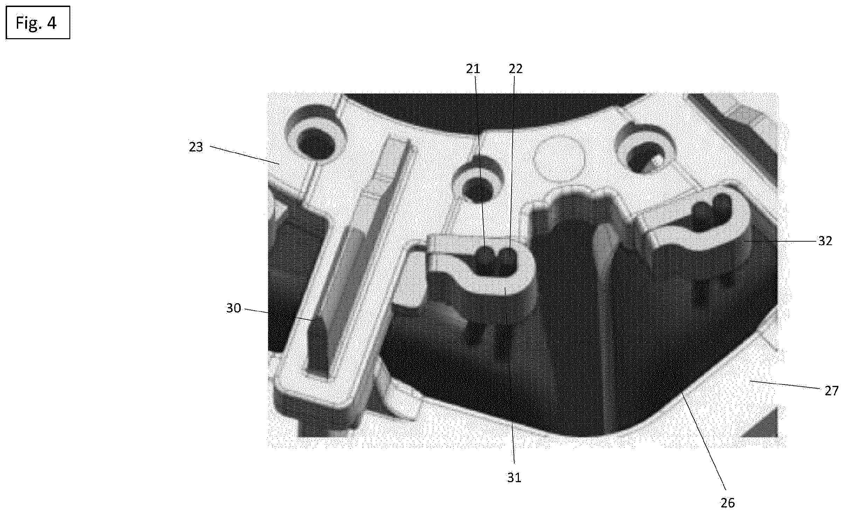

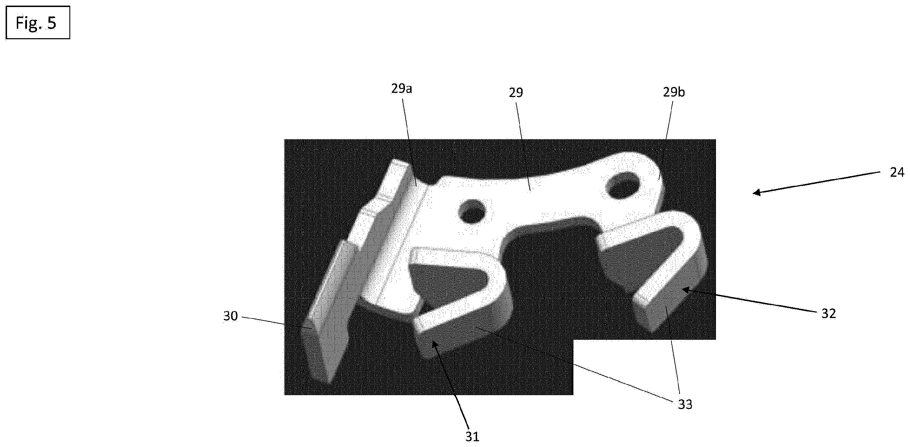

Wie in Figur 4 und 5 gezeigt enthält jede Klemmvorrichtung 24 dabei ein Trägerelement 29 mit einem Anschlusselement 30 sowie einem ersten und zweiten Klauenelement 31, 32.

Wie insbesondere in Figur 5 gezeigt, ist das Trägerelement 29 im Wesentlichen als längliche Grundplatte ausgestaltet. Das als längliche Grundplatte ausgestaltete Trägerelement 29 weist dabei ein erstes Ende 29a und ein zweites Ende 29b sowie ein obere Kante 29c und eine untere Kante 29d auf. An dem ersten Ende 29a des Trägerelements 29 ist das Anschlusselement 30 positioniert. Das Anschlusselement 30 dient als Anschlussstelle für eine Leitung zur Stromversorgung.

Die Leitung ist in den Figuren nicht dargestellt.

An der unteren Kante 29d und an dem zweiten Ende 29b des Trägerelements 29 ist das erste Klauenelement 31 positioniert. In der Nähe des zweiten Endes 29b des Trägerelements 29 ist das zweite Klauenelement 32 positioniert.

Jedes Klauenelement 31, 32 enthält ein elastisch verformbaren Schenkel 33, welches in einen ersten oder zweiten Zustand einstellbar ist.

In dem ersten Zustand ist der Schenkel 33 unverformt bzw. geöffnet, vgl. Figur 5. In dem zweiten Zustand ist der Schenkel 33 so verformt, dass der erste und zweite Wickeldraht 21, 22 aufgenommen und gehalten werden kann, vgl. Figur 3 und 4.

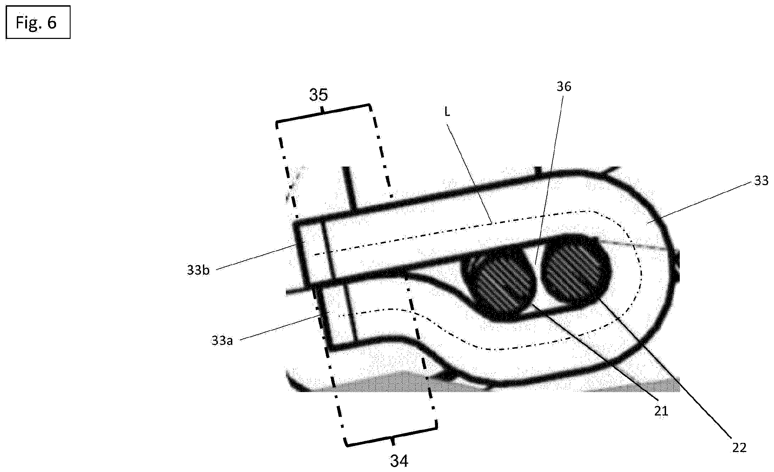

In Figur 6 ist ein Schenkel 33 eines Klauenelements 31, 32 in einem zweiten Zustand bzw. in einer verformten Lage gezeigt, sodass der erste und zweite Wickeldraht 21, 22 von dem Schenkel 33 des Klauenelements 31, 32 gehalten werden.

Der Schenkel 33 weist insbesondere eine Länge L auf, sodass in dem zweiten Zustand, d.h. verformten Zustand des Schenkels 33 der erste und zweite Wickeldraht 21, 22 mit einer Querschnittsfläche zwischen 1,5 bis 2 mm², und insbesondere 1,8 mm², aufgenommen werden kann.

Wie in Figur 6 dargestellt, liegt in dem zweiten Zustand, d.h. verformten Zustand des Schenkels 33, ein erster (freier) Abschnitt 34 des an einem ersten Ende 33a des Schenkels 33 im Wesentlichen parallel zu einem zweiten Abschnitt 35 an einem zweiten Ende 33b des Schenkels 33 an. Hierdurch entsteht zwischen dem ersten Ende 33a und zweiten Ende 33b des Schenkels 33 ein Aufnahmeraum 36 für den ersten und zweiten Wickeldraht 21, 22.

Die Klemmvorrichtung 24 besteht wenigstens teilweise aus einer niedriglegierten Kupferlegierung mit einem relativ niedrigen Zinngehalt und einer relativ hohen elektrischen Leitfähigkeit, insbesondere aus CuSn0,15.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Werkzeug
- 7: Akku-Schnittstelle
- 8: Aktivierungsschalter
- 9: Antrieb
- 10: Getriebevorrichtung
- 11: Antriebswelle
- 12: Steuerungseinrichtung
- 13: Energiespeicherzelle
- 14: Akku-Schnittstelle
- 15: Steuerungseinrichtung
- 16: Stator
- 16a: oberes Ende des Stators
- 16b: unteres Ende des Stators
- 17: Rotor
- 18: Blechpaket
- 21: erster Wickeldraht
- 22: zweiter Wickeldraht
- 23: Sammeleinheit
- 24: Klemmvorrichtung
- 25: Polzahn
- 26: Spule
- 26a: oberes Ende der Spule
- 27: Wickelstütze
- 28: Kunststoff
- 29: Trägerelement
- 29a: erstes Ende des Trägerelements
- 29b: zweites Ende des Trägerelements
- 29c: obere Kante des Trägerelements
- 29d: untere Kante des Trägerelements
- 30: Anschlusselement
- 31: erstes Klauenelement
- 32: zweites Klauenelement
- 33: Schenkel
- 33a: erstes Ende des Schenkels
- 33b: zweites Ende des Schenkels
- 34: erster Abschnitt des Schenkels
- 35: zweiter Abschnitt des Schenkels
- 36: Aufnahmeraum
- 40: Akku-Gehäuse
- 40a: Deckelelement des Akku-Gehäuses
- 40b: Seitenwand des Akku-Gehäuses
- 40c: Bodenelement des Akku-Gehäuses

- L: Länge des Schenkels

## Patentansprüche

1. Klemmvorrichtung (24) für einen Stator (16) eines Elektromotors, insbesondere als Antrieb (9) für eine Werkzeugmaschine (1),
**gekennzeichnet durch** ein Trägerelement (29) mit einem Anschlusselement (30) sowie wenigstens einem ersten und zweiten Klauenelement (31, 32) zur jeweiligen Aufnahme eines Wickeldrahts (21, 22).

2. Klemmvorrichtung (24) nach Anspruch 1,
**dadurch gekennzeichnet, dass** jedes Klauenelement (31, 32) ein elastisch verformbaren Schenkel (33) enthält, welches in einen ersten oder zweiten Zustand einstellbar ist, wobei in dem ersten Zustand der Schenkel (33) geöffnet ist und in dem zweiten Zustand der Schenkel (33) so verformt ist, dass wenigstens ein Wickeldraht (21, 22) aufgenommen und gehalten wird.

3. Klemmvorrichtung (24) nach Anspruch 1 oder 2,
**dadurch gekennzeichnet, dass** der Schenkel (33) eine Länge (L) aufweist, dass in einem zweiten Zustand des Schenkels (33) wenigstens ein erster und zweiter Wickeldraht (21, 22) mit einer Querschnittsfläche zwischen 1,5 bis 2 mm², und insbesondere 1,8 mm², aufnehmen kann.

4. Klemmvorrichtung (24) nach wenigstens einem der Ansprüche 1 bis 3,
**dadurch gekennzeichnet, dass** in einem zweiten Zustand des Schenkels (33) ein erster Abschnitt (34) an einem ersten Ende (33a) des Schenkels (33) im Wesentlichen parallel zu einem zweiten Abschnitt (35) an einem zweiten Ende (33b) des Schenkels (33) anliegt und zwischen dem ersten und zweiten Ende (33a, 33b) des Schenkels (33) ein Aufnahmeraum (36) für einen Wickeldraht (21, 22) entsteht.

5. Klemmvorrichtung (24) nach wenigstens einem der Ansprüche 1 bis 4,
**dadurch gekennzeichnet, dass** die Klemmvorrichtung (24) wenigstens teilweise aus einer niedriglegierten Kupferlegierung mit einem relativ niedrigen Zinngehalt und einer relativ hohen elektrischen Leitfähigkeit, insbesondere aus CuSn0,15, besteht.

6. Stator (16) für einen Elektromotor mit wenigstens einer Klemmvorrichtung (24) nach wenigstens einem der Ansprüche 1 bis 5 enthaltend ein Trägerelement (29) mit einem Anschlusselement (30) sowie wenigstens einem ersten und zweiten Klauenelement (31, 32).

7. Werkzeugmaschine (1) mit einem Stator (16) für einen Elektromotor nach Anspruch 6 enthaltend wenigstens eine Klemmvorrichtung (24) mit einem Trägerelement (29) mit einem Anschlusselement (30) sowie wenigstens einem ersten und zweiten Klauenelement (31, 32).
